# EUROPEAN PATENT APPLICATION

(11) **EP 1 909 521 A1**
(43) Date of publication of application: **09.04.2008**
(21) Application number: 06020727.1
(22) Date of filing: 02.10.2006
(51) Int. Cl.: H04Q 7/38

(54) **Method for supporting quality of service over a connection lifetime**

(71) Applicant: MATSUSHITA ELECTRIC INDUSTRIAL CO., LTD., Osaka 571-8501 (JP)
(72) Inventor: Löhr, Joachim, 63225 Langen (DE); Petrovic, Dragan, 63225 Langen (DE); Feuersänger, Martin, 63225 Langen (DE)
(74) Representative: Grünecker, Kinkeldey, Stockmair & Schwanhäusser Anwaltssozietät

(57) **Abstract**

The invention relates to a method for determining Quality of Service information of a radio bearer configured in a mobile node and distributing scheduled radio resources to the radio bearer. Further, the invention also provides a base station and mobile node performing these methods, respectively. The invention suggests a scheme that allows for supporting an efficient Quality of Service over the lifetime of a connection, even upon handover of the mobile node between two radio cells. This is achieved by providing Quality of Service measurements upon handover, such as a provided bit rate of radio bearers configured for the mobile node, to the base station controlling the target radio cell, either by the source base station in the source radio cell or the mobile node.

## Description

### FIELD OF THE INVENTION

The invention relates to a method for scheduling data transmissions and managing Quality of Service in a mobile communication network. The invention is particularly suitable for uplink data transmissions in an orthogonal single-carrier radio access scheme, but is not restricted thereto.

### TECHNICAL BACKGROUND

### Long Term Evolution (LTE)

Third-generation mobile systems (3G) based on WCDMA radio-access technology are being deployed on a broad scale all around the world. A first step in enhancing or evolving this technology entails introducing High-Speed Downlink Packet Access (HSDPA) and an enhanced uplink, also referred to as High Speed Uplink Packet Access (HSUPA), giving a radio-access technology that is highly competitive.

However, knowing that user and operator requirements and expectations will continue to evolve, the 3GPP has begun considering the next major step or evolution of the 3G standard to ensure the long-term competitiveness of 3G. The 3GPP launched a Study Item "Evolved UTRA and UTRAN" (E-UTRA and E- UTRAN). The study will investigate means of achieving major leaps in performance in order to improve service provisioning and reduce user and operator costs.

It is generally assumed that there will be a convergence toward the use of Internet Protocols (IP), and all future services will be carried on top of IP. Therefore, the focus of the evolution is on enhancements to the packet-switched (PS) domain.

The main objectives of the evolution are to further improve service provisioning and reduce user and operator costs as already mentioned.

More specifically, some key performance and capability targets for the long-term evolution are:
■ Significantly higher data rates compared to HSDPA and HSUPA: envisioned target peak data rates of more than 100Mbps over the downlink and 50Mbps over the uplink
■ Improved coverage: high data rates with wide-area coverage
■ Significantly reduced latency in the user plane in the interest of improving the performance of higher layer protocols (for example, TCP) as well as reducing the delay associated with control plane procedures (for instance, session setup)
■ Greater system capacity: threefold capacity compared to current standards.
   Another key requirement of the long-term evolution is to allow for a smooth migration to these technologies.

### LTE architecture

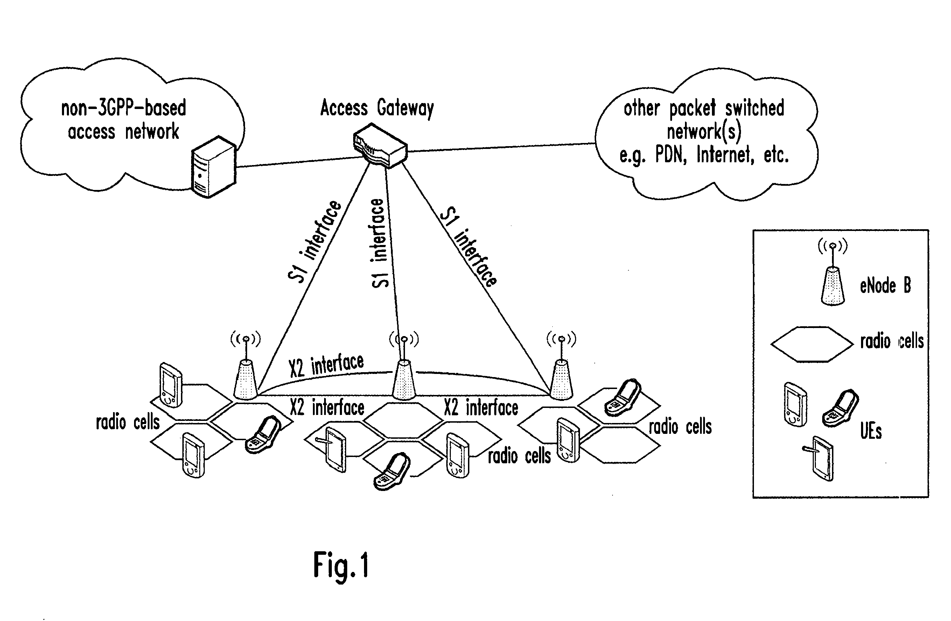

In Fig. 1 an overview of a 3GPP LTE mobile communication network is shown. The network consists of different network entities that are functionally grouped into the Core Network (CN), the Radio Access Network (RAN) and the User Equipments (UEs) or mobile terminals.

The RAN is responsible for handling all radio-related functionality *inter alia* including scheduling of radio resources. The CN may be responsible for routing calls and data connections to external networks.

The LTE network is a "two node architecture" consisting of Access Gateways (Access Gateway) being part of the CN and eNode Bs (eNode B) that are part of the RAN. The Access Gateway will handle CN functions, such as routing calls and data connections to external networks, and may also implement some RAN functions. Thus, the Access Gateway may be considered as to combine functions performed by GGSN and SGSN in today's 3G networks and RAN functions as for example header compression, ciphering/integrity protection. The eNode Bs may handle functions such as for example Radio Resource Control (RRC), segmentation/concatenation, scheduling and allocation of resources, multiplexing and physical layer functions.

A mobile communication network is typically modular and it is therefore possible to have several network entities of the same type. The interconnections of network elements are defined by open interfaces. UEs can connect to an eNode B via the air interface the so-called Uu interface. The eNode Bs have a connection to an Access Gateway via the so-called S1 interface. Two eNode Bs are interconnected via the so-called X2 interface.

Both 3GPP and Non-3GPP integration may be handled via the Access Gateway's interface to the external packet data networks (e.g. Internet).

### Quality of Service control

Efficient Quality of Service (QoS) support is seen as a basic requirement by operators for LTE. In order to allow best in class user experience, while on the other hand optimizing the network resource utilization, enhanced QoS support should be integral part of the new system.

Several aspects of QoS support are currently under discussion within 3GPP working groups. Essentially, the QoS design for System Architecture Evolution (SAE)/LTE is based on the QoS design of the current UMTS system reflected in 3GPP TS23.107, "Quality of Service (QoS) concept and architecture (Rel6)"v.6.4.0. The agreed SAE Bearer Service architecture is represented in Fig. 2. The definition of a bearer service as given in this document is still applicable:
" A bearer service includes all aspects to enable the provision of a contracted Quality of Service. These aspects are among others the control signalling, user plane transport and QoS management functionality".

The SAE Bearer Service provides:
- QoS wise aggregation of IP end-to-end-service flows;
- IP header compression and provision of related information to the UE;
- User Plane encryption and provision of related information to the UE;
- if prioritised treatment of end-to-end-service signalling packets is required, an additional SAE bearer service can be added to the default IP service;
- provision of mapping/multiplexing information to the UE;
- provision of accepted QoS information to the UE.

The SAE Radio Bearer Service provides:
- transport of the SAE Bearer Service data units between eNodeB and UE according to the required QoS;
- linking of the SAE Radio Bearer Service to the respective SAE Bearer Service.

The SAE Access Bearer Service provides:
- transport of the SAE Bearer Service data units between the Access Gateway (AGW) and eNodeB according to the required QoS;
- provision of aggregate QoS description of the SAE Bearer Service towards the eNodeB;
- linking of the SAE Access Bearer Service to the respective SAE Bearer Service.

There is a one-to-one mapping between an SAE Bearer and an SAE Radio Bearer. Furthermore there is a one-to-one mapping between a Radio Bearer and a logical channel. From that definition, it follows that an SAE Bearer, i.e. the corresponding SAE Radio Bearer and SAE Access Bearer, is the level of granularity for QoS control in an SAE/LTE access system. Packet flows mapped to the same SAE Bearer receive the same treatment.

For LTE there will be two different SAE bearer types: the default SAE bearer with a default QoS profile, which is configured during initial access and the dedicated SAE bearer which is established for services requiring a QoS profile which is different from the default one.

The default SAE bearer is an "always on" SAE bearer that can be used immediately after LTE_ IDLE to LTE_ACTIVE state transition. It carries all flows which have not been signalled a Traffic Flow Template (TFT). The Traffic Flow Template is used by the Access Gateway to discriminate between different user payloads. The TFT incorporates packet filters such as QoS. Using the packet filters the Access Gateway maps the incoming data into the correct PDP Context. For the default SAE bearer, several service data flows can be multiplexed.

Unlike the default SAE Bearer, the dedicated SAE Bearers are aimed at supporting identified services in a dedicated manner, typically to provide a guaranteed bit rate. Dedicated SAE bearers are established by the Access Gateway based on the QoS information received in PCC rules from the Core Network when a new service is requested. A dedicated SAE bearer is associated with packet filters where the filters match only certain packets. A default SAE bearer is associated with "match all" packet filters for uplink and downlink. For uplink handling, the Access Gateway builds the TFT filters for the dedicated SAE bearers. The UE maps service data flows to the correct bearer based on the TFT, which has been signalled during bearer establishment. As for the default SAE Bearer, also for the dedicated SAE Bearer, several service data flows can be multiplexed.

The QoS Profile of the SAE bearer is signalled from the Access Gateway to the eNodeB during the SAE bearer setup procedure. This profile is then used by the eNodeB to derive a set of Layer 2 QoS parameters, which will determine the QoS handling on the air interface. The Layer 2 QoS parameters are input the scheduling functionality. The parameters included in the QoS profile signalled on S1 interface from the Access Gateway to the eNodeB are currently under discussion. Most likely, the following QoS profile parameters are signalled for each SAE bearer: Traffic Handling Priority, Maximum Bit Rate, Guaranteed Bit Rate. In addition, the Access gateway signals to the eNodeB the allocation and retention priority for each user during initial access.

### Uplink Access scheme for LTE

For uplink transmission, power-efficient user-terminal transmission is necessary to maximize coverage. Single-carrier transmission combined with FDMA and dynamic bandwidth allocation has been chosen as the evolved UTRA uplink transmission scheme. The main reason for the preference for single-carrier transmission is the lower peak-to-average power ratio (PAPR) compared to multi-carrier signals (such as OFDMA), the corresponding improved power-amplifier efficiency and assumed improved coverage (higher data rates for a given terminal peak power). In each time interval, Node B assigns users a unique time/frequency resource for transmitting user data thereby ensuring intra-cell orthogonality. An orthogonal access in the uplink promises increased spectral efficiency by eliminating intra-cell interference. Interference due to multipath propagation is handled at the base station (Node B), aided by insertion of a cyclic prefix in the transmitted signal.

The basic physical resource used for data transmission consists of a frequency resource of size BW_{grant} during one transmission time interval, e.g. a sub-frame of 0.5 ms, onto which coded information bits are mapped. It should be noted that a sub-frame, also referred to as transmission time interval (TTI), is the smallest time interval for user data transmission. It is however possible to assign a frequency resource BW_{grant} over a longer time period than one TTI to a user by concatenation of sub-frames.

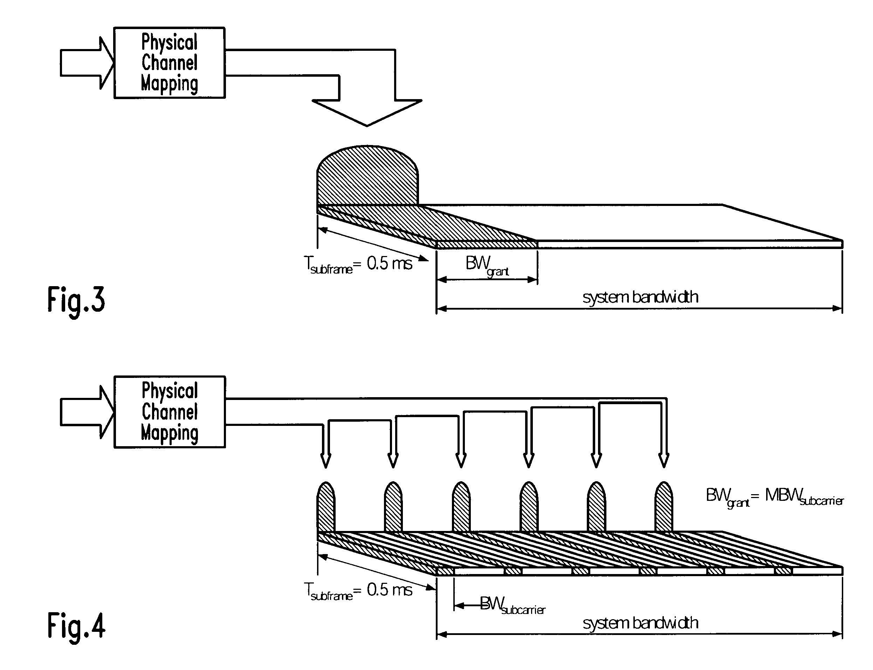

The frequency resource can either be in a localized or distributed spectrum as illustrated in Fig. 3 and Fig. 4. As can be seen in Fig. 3, localized single-carrier is characterized by the transmitted signal having a continuous spectrum that occupies a part of the total available spectrum. Different symbol rates (corresponding to different data rates) of the transmitted signal imply different bandwidths of a localized single-carrier signal.

On the other hand, as can be seen in Fig. 4, distributed single-carrier is characterized by the transmitted signal having a non-continuous ("comb-shaped") spectrum that is distributed over system bandwidth. Note that, although the distributed single-carrier signal is distributed over the system bandwidth, the total amount of occupied spectrum is, in essence, the same as that of localized single-carrier. Furthermore, for higher/lower symbol rate, the number of "comb-fingers" is increased/reduced, while the "bandwidth" of each "comb finger" remains the same.

At first glance, the spectrum shown in Fig. 4 may give the impression of a multi-carrier signal where each comb-finger corresponds to a "sub-carrier". However, from the time-domain signal-generation of a distributed single-carrier signal, it should be clear that what is being generated is a true single-carrier signal with a corresponding low peak-to-average power ratio.

The key difference between a distributed single-carrier signal vs. a multi-carrier signal, such as e.g. OFDM, is that, in the former case, each "sub-carrier" or "comb finger" does not carry a single modulation symbol. Instead each "comb-finger" carries information about all modulation symbol. This creates a dependency between the different comb-fingers that leads to the low-PAPR characteristics. It is the same dependency between the "comb fingers" that leads to a need for equalization unless the channel is frequency-non-selective over the entire transmission bandwidth. In contrast, for OFDM equalization is not needed as long as the channel is frequency-non-selective over the sub-carrier bandwidth.

Distributed transmission can provide a larger frequency diversity gain than localized transmission, while localized transmission more easily allows for channel-dependent scheduling. Note that, in many cases the scheduling decision may decide to give the whole bandwidth to a single UE to achieve high data rates.

### Uplink scheduling scheme

The uplink scheme should allow for both scheduled (Node B controlled) access and contention-based access. In case of scheduled access the UE is dynamically allocated a certain frequency resource for a certain time (i.e. a time/frequency resource) for uplink data transmission.

Some time/frequency resources can be allocated for contention-based access. Within these time/frequency resources, UEs can transmit without first being scheduled.

For the scheduled access Node B scheduler assigns a user a unique frequency/time resource for uplink data transmission. For example, the scheduler determines
■ which UE(s) is (are) allowed to transmit,
■ which physical channel resources (frequency),
■ for how long the resources may be used (number of sub-frames)
■ Transport format (e.g. Modulation Coding Scheme (MCS)) to be used by the mobile terminal for transmission

The allocation information is signaled to the UE via a scheduling grant sent on the downlink control channel. In LTE, for simplicity this channel is also referred to as LTE_HS_SCCH (Long Term Evolution - High Speed - Shared Control CHannel). A scheduling grant message contains at least information on which part of the frequency band the UE is allowed to use, whether localized or distributed spectrum should be used, the validity period of the grant, and the maximum data rate. The shortest validity period is one sub-frame. Additional information may also be included in the grant message, depending on the selected scheme.

Uplink data transmissions are only allowed to use the time-frequency resources assigned to the UE through the scheduling grant. If the UE does not have a valid grant, it is not allowed to transmit any uplink data. Unlike in HSUPA, where each UE is always allocated a dedicated channel there is only one uplink data channel shared by multiple users (UL SCH - UpLink Shared CHannel) for data transmissions. Furthermore, there is only one mode of operation for the uplink data access in LTE, the above described scheduled access, i.e. unlike in HSUPA where both scheduled and autonomous transmissions are possible.

To request resources, the UE transmits a resource request message to the Node B. This resources request message could for example contain information on the amount of data to transmit, the power status of the UE and some Quality of Services (QoS) related information. This information, which will be referred to as scheduling information, allows Node B to make an appropriate resource allocation.

Since the scheduling of radio resources is the most important function in a shared channel access network for determining Quality of service, there are a number of requirements that should be fulfilled by the Uplink scheduling scheme for LTE in order to allow for an efficient QoS management. These requirements have been formulated in R2- R2-062606, "QoS operator requirements/use cases for services sharing the same bearer", T-Mobile, NTT DoCoMo, Vodafone, Orange, KPN
- The Uplink scheduling scheme for LTE should provide a finer network-based QoS control than what is supported in Rel-6 (HSUPA)
- Starvation of low priority services, i.e. degradation of the Quality of Service, should be avoided
- Clear QoS differentiation for radio bearers/services should be supported by the scheduling scheme
- The Uplink reporting should allow fine granular buffer reports (e.g. per radio bearer or per radio bearer group) in order to allow the eNodeB scheduler to identify for which Radio Bearer/service data is to be sent.
- It should be possible to change the priorities used in the Uplink scheduling decision of the UE dynamically, based on operator requirements
- It should be possible to make clear QoS differentiation between services of different users
- It should be possible to provide a minimum bit rate per radio bearer.

As can be seen from the above list of requirements, one essential aspect of the LTE scheduling scheme is to provide mechanisms with which the operator can control the partitioning of its aggregate cell capacity between the radio bearers of the different QoS classes. The QoS class of a radio bearer is identified by the QoS profile of the corresponding SAE bearer signalled from the Access Gateway to the eNodeB as described before. An operator can then allocate a certain amount of its aggregate cell capacity to the aggregate traffic associated with radio bearers of a certain QoS class.

The main goal of employing this class-based approach is to be able to differentiate the treatment of packets depending on the QoS class they belong to. For example, as the load in a cell increases, it should be possible for an operator to handle this by throttling traffic belonging to a low-priority QoS class. At this stage, the high-priority traffic can still experience a low-loaded situation, since the aggregate resources allocated to this traffic is sufficient to serve it. This should be possible in both uplink and downlink direction.

One benefit of employing this approach is to give the operator full control of the policies that govern the partitioning of the bandwidth. For example, one operator's policy could be to, even at extremely high loads, avoid starvation of traffic belonging to its lowest priority QoS Class. The avoidance of starvation of low priority traffic is one of the main requirements for the UL scheduling scheme in LTE.

In current Rel6 (HSUPA) scheduling mechanism, the absolute prioritization scheme may lead to starvation of low priority applications. Indeed, the E-DCH Transport Format Combination (E-TFC) selection is done only in accordance to absolute logical channel priorities, i.e. the transmission of high priority data is maximized, which means that low priority data is possibly starved by high priority data.

### Intra-E-UTRAN mobility

As in UMTS systems, also for UEs connected in a E-UTRAN network, controlled UE-assisted handovers from a source radio cell controlled by a source eNodeB to a target radio cell controlled by a target eNodeB are performed. Based on measurements reported by the users, the source eNodeB makes a decision to hand off the UE to the target radio cell. The measurement reported by the UE is for example the downlink channel quality of a cell based on received pilot energy. Measurements to be performed by a UE for intra e-UTRAN mobility can be controlled by E-UTRAN using broadcast or dedicated control.

In case the quality of the current radio link gets below a quality threshold, the source eNodeB decides to hand over the UE to a neighbour target cell which is reported to provide a better radio link quality.

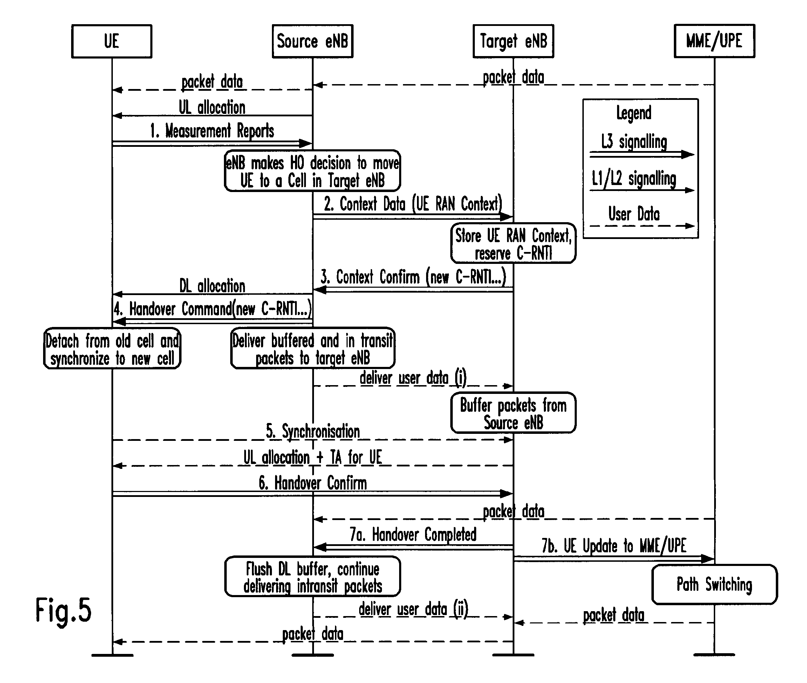

Fig. 5 represents an exemplary inter-eNodeB handover procedure where neither the Mobility Management Entity (MME) nor the User Plane Entity (UPE) is changed. A description of the handover is given in the following:

In step 1, the UE is triggered to send measurement reports by the rules set by e.g. system information or specification. Upon reception of the measurement reports, the source eNodeB decides to move the UE to the target radio cell. Hence, in step 2, the source eNodeB makes the decision based on MEASUREMENT REPORT and RRM information to hand off UE. The source eNodeB prepares the target eNodeB for handover and passes relevant context information in the Handover Request message (message 2).

In step 3, the target eNodeB prepares the handover with Layer 1/Layer 2 signalling and responds to the source eNodeB by providing context confirmation information, such as new C-RNTI and possibly some other parameters like access parameters, SIBs, etc... After reception of the accepted preparation of handover, the source eNB starts forwarding data packets to the target eNodeB.

In step 4, the UE receives a Handover command message with the necessary parameters, such as new C-RNTI, possible starting time, target eNodeB, SIBs etc... The UE may have to acknowledge the reception of the Handover command message using an RLC acknowledgment procedure.

In step 5, the UE detaches from the source radio cell and, after expiry of the starting time in the Handover command message, performs the synchronisation to the target eNodeB and then starts acquiring Uplink timing advance.

The network responds with Uplink allocation and timing advance, which are used by the UE in step 6 to send a Handover confirm message to the target eNodeB, which completes the handover procedure for the UE. The network may need to acknowledge the reception of the Handover confirm message with RLC acknowledgment procedure.

In step 7a, the target eNodeB informs the source eNodeB of the success of the handover, which can then clear already forwarded data from its buffers. The Source eNodeB still continues forwarding the user data if it has some in its buffers or if the User Plane Entity (UPE) still forwards data to it.

### Data forwarding

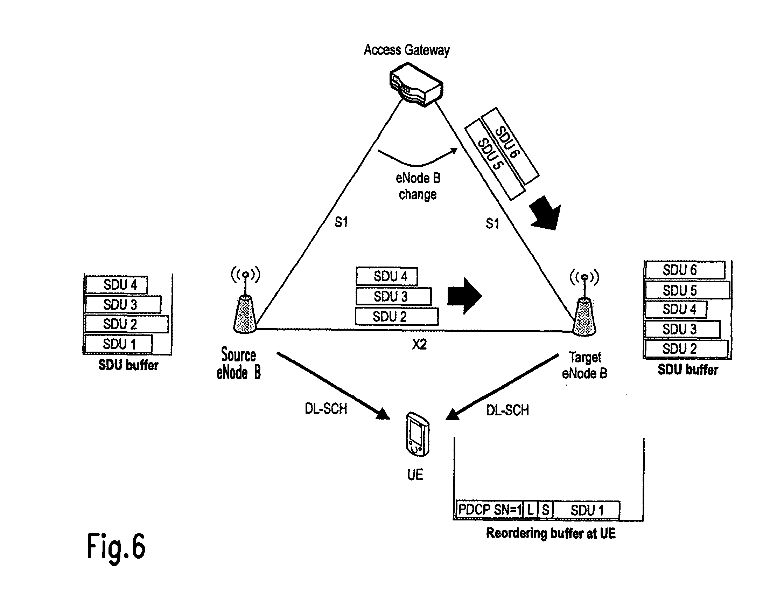

For a downlink data transmission, in case an UE is handed over to a cell controlled by a different eNode B, also referred to as inter eNode B handover, data forwarding of RLC SDUs from the Serving or Source eNode B (SeNode B) to the new target eNode B (TeNode B) is done in order to provide a lossless handover. The scenario is shown in Fig. 6. Before the handover UE is connected to SeNode B, RLC SDUs (IP packets) are sent from Access Gateway to SeNode B over the S1 interface. SeNode B controls the transmission of the IP packets to the user over the radio channel by means of scheduling as described above. It's assumed here for exemplary purposes that the RLC is configured in acknowledged mode.

Upon handover, the source eNode B forwards all downlink RLC SDUs, starting from the first SDU that has not been successfully received by the UE, to the target eNode B over the X2 interface. The source eNode B discards any remaining downlink RLC PDUs. The target eNode B re-transmits all downlink RLC SDUs forwarded by the source eNode B.

In the following, an example of the data forwarding mechanism is given. Before handover the RLC status of the transmitted RLC SDUs is as follows:
■ RLC SDU {2} is fully acknowledged (ACK),
■ RLC SDU {3} has outstanding segments, i.e. RLC PDUs (partly ACK),
■ RLC SDUs {4,} fully acknowledged (ACK)

As can be seen RLC SDUs 2 & 4 are correctly received by the UE. One or several RLC PDUs containing segments of RLC SDU 3 have not been correctly received by the UE, i.e. UE has send a NACK for those RLC PDUs. Upon handover not only RLC SDU 3 but also RLC SDU 4 is forwarded to the TeNode B. The RLC SDU forwarding allows for a simple handover mechanism where no RLC context, i.e. status of the RLC SDUs, needs to be transferred to the target eNode B. However the solution can be slightly less efficient due to re-transmissions of already acknowledged RLC SDUs from the Target eNode B (SDU 4 in the example above).

During inter-eNode B handover the source eNode B forwards all downlink RLC SDUs, starting from the first SDU that has not been successfully received by the UE, to the target eNode B over the X2 interface. The source eNode B discards any remaining downlink RLC PDUs. The target eNode B re-transmits all downlink RLC SDUs forwarded by the source eNode B.

For an uplink data transmission, the source eNB forwards all successfully received uplink RLC SDUs to the Access Gateway (aGW) and discards any remaining uplink RLC PDUs upon handover. The UE re-transmits the uplink RLC SDUs that have not been successfully received by the source eNB. Correspondingly, the source eNB neither forwards uplink RLC SDUs nor the uplink RLC context to the target eNB.

### SUMMARY OF THE INVENTION

An object of the invention is to support a required level of Quality of Service over the lifetime of a connection established for a mobile node, even upon handover of the mobile node between radio cells.

Another object of the invention is to avoid a starvation of low priority flows in the Uplink scheduling scheme for LTE.

At least one of these objects is solved by the subject matter of the independent claims. Advantageous embodiments of the invention are subject matters of the dependent claims.

According to an aspect of the invention, upon handover of a mobile node from a source radio cell to a target radio cell, a Quality of Service parameter of a radio bearer configured for the mobile node is measured in the source radio cell and signalled to the target base station controlling the target radio cell. The target base station can then determine information on the Quality of Service parameter in the target radio cell based on the signalled measurement of the Quality of Service parameter measured in the source radio cell.

According to an embodiment of the invention, a method for determining Quality of Service information of at least one radio bearer configured for a mobile node comprises the steps performed by a target base station of receiving first information on a Quality of Service parameter of at least one radio bearer upon handover of the mobile node from a source radio cell to the target radio cell controlled by the target base station, said Quality of Service parameter being measured in the source radio cell, and determining second information on the Quality of Service parameter of the at least one configured radio bearer based on the received information on the Quality of Service parameter measured in the source radio cell.

In an embodiment of the invention, the target base station schedules the mobile node based on the second information on the Quality of Service parameter.

In another embodiment of the invention, the target base station allocates radio resources to the mobile node based on the second information on the Quality of Service parameter.

In yet another embodiment of the invention, the target base station determines radio resource distribution information for the mobile node based on the second information on the Quality of Service parameter.

In an embodiment of the invention, the resource allocation information and radio resource distribution information is transmitted to the mobile node jointly in a control message or separately in separate control messages.

In another embodiment of the invention, the target base station receives the information on the Quality of Service parameter of the at least one configured radio bearer from a source base station controlling the source radio cell.

In yet another embodiment of the invention, the target base station receives the first information on the Quality of Service parameter of the at least one configured radio bearer from the source base station in a handover request message.

In an embodiment of the invention, a source base station controlling the source radio cell measures the Quality of Service parameter of the at least one radio bearer established between the mobile node and the source base station.

In another embodiment of the invention, a plurality of radio bearers is configured for the mobile node, and the target base station receives the Quality of Service parameter for all or a subset of the plurality of radio bearers from a source base station controlling the source radio cell.

In yet another embodiment of the invention, the target base station accumulates history information on the Quality of Service parameter upon handover of the mobile node from the source radio cell to the target radio cell.

In another embodiment of the invention, a plurality of radio bearers is configured for the mobile node, and radio resource distribution information comprises an indication of a priority order of the distribution of allocated radio resources by the mobile node to the plurality of configured radio bearers.

In yet another embodiment of the invention, the target base station measures and records a value of the measured Quality of Service parameter for each configured radio bearer over a predetermined period of time.

In an embodiment of the invention, the target base station detects when a recorded value of a Quality of Service parameter of a radio bearer out of a plurality of radio bearers is smaller than a predetermined value, and increases the priority of the radio bearer in a priority order of the distribution of radio resources by the mobile node to the plurality of configured radio bearers.

In another embodiment of the invention, the Quality of Service parameter of the at least one radio bearer comprises the total number of bits of the at least one radio bearer transmitted successfully over the radio interface in a predetermined time duration divided by the time duration.

In yet another embodiment of the invention, a plurality of radio bearers is configured for the mobile node, and the Quality of Service parameter of a radio bearer comprises the total number of bits of the radio bearer transmitted successfully over the radio interface in a predetermined time duration divided by the time duration.

In an embodiment of the invention, the target base station receives for the at least one configured radio bearer the total number of bits per time duration.

In an alternative embodiment of the invention, a minimum bit rate is configured for a radio bearer, and the target base station receives a bit for a radio bearer indicating whether the total number of bits per time duration is smaller than the configured minimum bit rate.

In yet another alternative embodiment of the invention, a plurality of radio bearers is configured for the mobile node, and the target base station receives for the at least one radio bearer a preferred priority order of the distribution of allocated radio resources by the mobile node to the plurality of configured radio bearers, wherein the preferred priority order is based on the measured Quality of Service parameter of the at least one radio bearer in the source radio cell.

According to an embodiment of the invention, a method for distributing radio resources to at least one radio bearer configured for a mobile node comprises the step performed by the mobile node of distributing allocated radio resources to the at least one radio bearer established between the mobile node and a target base station in the target radio cell taking into account information on a Quality of Service parameter of the at least one radio bearer upon handover of the mobile node from the source radio cell to the target radio cell, said Quality of Service parameter being measured in the source radio cell.

In an embodiment of the invention, the mobile node receives radio resource distribution information from the target base station that is based on the information on the Quality of Service parameter of the at least one radio bearer.

In an embodiment of the invention, in the step of distributing the allocated radio resources to the at least one configured radio bearer, the allocated radio resources are distributed based on the received radio resource distribution information, thereby taking into account the information on the Quality of Service parameter measured in the source radio cell.

In another embodiment of the invention, the mobile node receives resource allocation information from the target base station that is based on the information on the Quality of Service parameter of the at least one radio bearer.

In another embodiment of the invention, in the step of distributing the allocated radio resources to the at least one configured radio bearer, the allocated resources signalled in the received resource allocation information are distributed based on the received radio resource distribution information, thereby taking into account the information on the Quality of Service parameter measured in the source radio cell.

In yet another embodiment of the invention, the mobile node receives resource allocation information and radio resource distribution information jointly in a control message or separately in separate control messages.

In an embodiment of the invention, the control message is a scheduling-related control message received from the target base station.

In an embodiment of the invention, the mobile node transmits the information on the Quality of Service parameter of the at least one radio bearer to the target base station.

In another embodiment of the invention, the mobile node transmits the information of the Quality of Service parameter of the at least one radio bearer to the target base station in a radio bearer reconfiguration message upon handover procedure completion.

In an embodiment of the invention, the mobile node measures the Quality of Service parameter of the at least one radio bearer configured in the source radio cell.

In another embodiment of the invention, a plurality of radio bearers is configured for the mobile node, and the mobile node is configured to transmit the Quality of Service parameter for all or a subset of the plurality of radio bearers to the target base station.

In an embodiment of the invention, the mobile node accumulates history information on the Quality of Service parameter upon handover of the mobile node from the source radio cell to the target radio cell.

In another embodiment of the invention, a plurality of radio bearers is configured for the mobile node, and radio resource distribution information comprises an indication of a priority order of the distribution of allocated radio resources by the mobile node to the plurality of configured radio bearers.

In an embodiment of the invention, the mobile node measures and records a value of the measured Quality of Service parameter for each of the configured radio bearer over a predetermined period of time.

In another embodiment of the invention, the mobile node detects when a recorded value of a Quality of Service parameter of a radio bearer out of a plurality of radio bearers is smaller than a predetermined value, and increases the priority of the radio bearer in a priority order of the distribution of allocated radio resources by the mobile node to the plurality of configured radio bearers.

In an embodiment of the invention, the Quality of Service parameter of the at least one radio bearer comprises the total number of bits of the at least one radio bearer transmitted successfully over the radio interface in a predetermined time duration divided by the time duration.

In another embodiment of the invention, a plurality of radio bearers is configured for the mobile node, and the Quality of Service parameter of a radio bearer comprises the total number of bits for the corresponding radio bearer transmitted successfully over the radio interface in a predetermined time duration divided by the time duration.

In an embodiment of the invention, the mobile node transmits to the target base station for the at least one configured radio bearer the total number of bits per time duration.

In an alternative embodiment of the invention, a minimum bit rate is configured for the at least one radio bearer, and the mobile node transmits to the target base station a bit for a radio bearer indicating whether the total number of bits per time duration is smaller than the configured minimum bit rate.

In yet another alternative embodiment of the invention, a plurality of radio bearers is configured for the mobile node, and the mobile node transmits to the target base station for the at least one radio bearer a preferred priority order of the distribution of allocated radio resources by the mobile node to the plurality of configured radio bearers, wherein the preferred priority order is based on the measured Quality of Service parameter of the at least one radio bearer.

According to an embodiment of the invention, a base station for determining Quality of Service information of at least one radio bearer configured for a mobile node comprises receiving means for receiving first information on a Quality of Service parameter of at least one radio bearer upon handover of the mobile node from a source radio cell to a target radio cell controlled by the base station, said Quality of Service parameter being measured in the source radio cell, and determining means for determining second information on the Quality of Service parameter of the at least one configured radio bearer based on the received information on the Quality of Service parameter measured in the source radio cell.

According to an embodiment of the invention, a mobile node for distributing radio resources to at least one radio bearer configured for the mobile node comprises distributing means for distributing allocated radio resources to the at least one radio bearer established between the mobile node and a target base station in the target radio cell taking into account information on a Quality of Service parameter of the at least one radio bearer upon handover of the mobile node from the source radio cell to the target radio cell, said Quality of Service parameter being measured in the source radio cell.

According to an embodiment of the invention, a computer readable medium stores instruction that, when executed by a processor of a base station, cause the base station to determine Quality of Service information of at least one radio bearer configured for a mobile node, by receiving first information on a Quality of Service parameter of at least one radio bearer upon handover of the mobile node from a source radio cell to the target radio cell controlled by the base station, said Quality of Service parameter being measured in the source radio cell, and determining second information on the Quality of Service parameter of the at least one configured radio bearer based on the received information on the Quality of Service parameter measured in the source radio cell.

According to an embodiment of the invention, a computer readable medium stores instruction that, when executed by a processor of a mobile node, cause the mobile node to distribute radio resources to at least one radio bearer configured for the mobile node, by distributing allocated radio resources to the at least one radio bearer established between the mobile node and a target base station in the target radio cell taking into account information on a Quality of Service parameter of the at least one radio bearer upon handover of the mobile node from the source radio cell to the target radio cell, said Quality of Service parameter being measured in the source radio cell.

### BRIEF DESCRIPTION OF THE FIGURES

In the following the invention is described in more detail in reference to the attached figures and drawings. Similar or corresponding details in the figures are marked with the same reference numerals.
- **Fig. 1**: shows functional elements and interfaces in a LTE architecture;

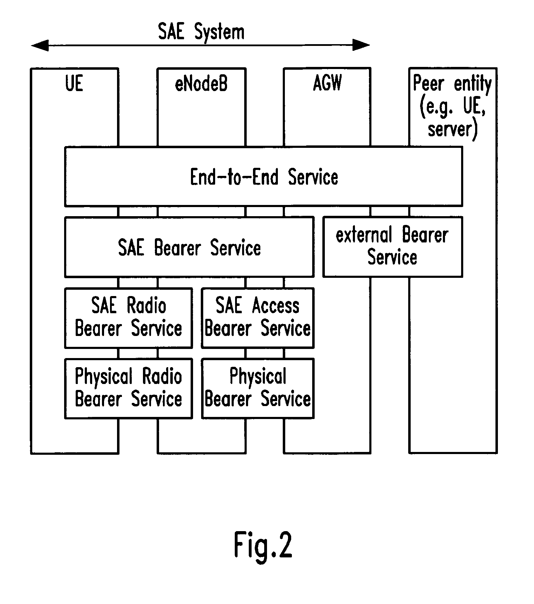

- **Fig. 2**: shows the LTE Bearer Service Architecture;
- **Fig. 3**: shows an exemplary Localized single-carrier FDMA transmission;
- **Fig. 4**: shows an exemplary Distributed single-carrier FDMA transmission;
- **Fig. 5**: shows an exemplary Inter-eNodeB handover;
- **Fig. 6**: shows an exemplary downlink transmission during an inter-eNodeB handover;
- **Fig. 7**: shows an Uplink scheduling scheme for the LTE architecture;
- **Fig. 8**: shows a Quality of Service measurement reporting by the source eNodeB during an inter-e-Node B handover according to an embodiment of the invention; and
- **Fig. 9**: shows a Quality of Service measurement reporting by the mobile node during an inter-eNodeB handover according to another embodiment of the invention.

### DETAILED DESCRIPTION OF THE INVENTION

In the following description, the terms "eNodeB" and "base station" will be used interchangeably as it will be apparent to a person skilled in the art that the invention is applicable to any mobile communication network and is not limited to a LTE communication network.

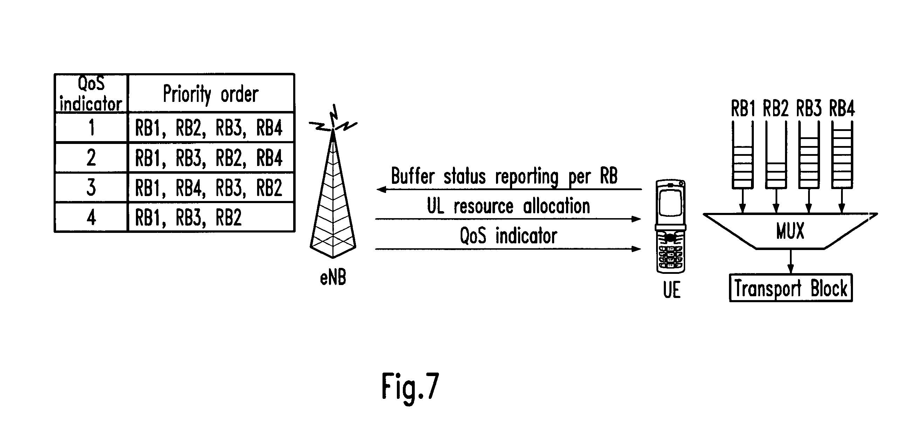

A possible implementation for avoiding a degradation of a Quality of Service (QoS) of a radio bearer configured for a mobile node will be explained in the following with respect to Fig. 7.

Fig. 7 illustrates a scheduling scheme for LTE uplink. A UE is served within a radio cell by a eNodeB. The UE reports the buffer status of each configured SAE radio bearer to the scheduler in the eNodeB. Based on these reports and on the QoS profiles of the radio bearers, the eNodeB allocates resources to the UE. The distribution of allocated resources amongst the radio bearers configured for the UE is performed by the UE according to the respective priority of the radio bearers as it is done in Rel6 by E-TFC (E-DCH Transport Format Combination) selection.

In order to achieve a better control in the network from which radio bearer data is transmitted, the eNodeB signals QoS-related information in addition to the resource allocation. This QoS related information indicates the priority order in which the UE should treat radio bearers during the E-TFC selection, i.e. the distribution of allocated resources among radio bearers. The priority order is signalled by means of a QoS indicator, where each value of the QoS indicator is mapped to a priority order between the radio bearers. The signalling of the QoS indicator could be done by using Layer 1/Layer 2 control signalling, i.e. QoS indicator is included in a scheduling grant, or alternatively by MAC control signalling or RRC signalling.

In Fig. 7, an example of this implementation is shown where 4 different QoS indicators are defined. The mapping between the QoS indicator and the priority order of the radio bearers is predefined, i.e. signalled to the UE by RRC signalling at connection setup. It is assumed that the "normal" operation mode would be the priority order indicated by QoS indicator 1. The 4 configured radio bearers are assumed to be, for example, RRC signalling, Voice over IP (VolP), Video, Best effort (BE) internet access. In normal operation, i.e. as indicated by QoS indicator 1, RRC signalling would have the highest priority followed by VoIP, Video and BE. In case a degradation of the Quality of Service occurs for e.g. the Video bearer, this would be detected by the eNodeB scheduler and scheduling would be performed with QoS indicator 2 for a predetermined amount of time, which would give a higher priority to the Video service.

In a similar manner, the QoS indicator 3 would be used if the radio bearer carrying Best Effort Internet would need more resources than its default priority allows. In the last row of the table represented in Fig. 7, the BE internet bearer is not even included which implies that data from this radio bearer is not allowed to be transmitted. The degradation of the Quality of Service of a certain radio bearer is detected in the eNodeB by recording statistics of past transmissions, e.g. the provided bit rate per radio bearer. For more details of this implementation, it is referred to R2-062126, "Uplink Radio Bearer Scheduling Schemes for LTE", Ericsson.

As apparent from the description of the scheduling scheme above, the avoidance of the degradation of the Quality of Service, i.e. the starvation, of low priority flows is solved by changing the priority order of configured radio bearers dynamically, which is used by the UE in the TFC selection. This network-controlled approach requires the detection of starvation at the eNodeB. As outlined before, starvation could be detected by recording certain statistics of past transmission activities of relevant radio bearers. The eNodeB could for example use throughput measurements, i.e. the provided bit rate of a radio bearer, as a criteria or in general some QoS measurement per radio bearer. In case a configured radio bearer wasn't allocated sufficient resources for data transmissions over a predetermined time period, the eNodeB could change the priority order, giving a higher priority to this "starved" radio bearer. By changing the priority order of radio bearers based on past transmission activities, degradation of Quality of Service could be avoided. This also allows for providing a minimum bit rate per a radio bearer.

However, in case the UE moves from a source radio cell to a target radio cell during a handover, the information on past transmission activities of the UE's configured radio bearers in the source cell is not known by the scheduler in the target eNodeB controlling the target radio cell. The scheduler in the target eNodeB begins to perform QoS measurements per radio bearer from scratch, which leads to a degradation of the efficiency of QoS control, as scheduling decisions in the target eNodeB will be only based on current QoS measurements, without considering past transmission statistics. In the same way, detection of starvation will be only based on current QoS measurements performed by the eNodeB; past QoS measurements from the source eNodeB will not be accounted for by the target eNodeB.

In the following, embodiments of the invention will be presented, which overcome the described problems by providing the scheduler in the target eNodeB with QoS measurements of the UE's configured radio bearers, i.e. information on past transmission statistics, in case of a inter-eNodeB handover between a source radio cell controlled by a source base station and a target radio cell controlled by a target base station. An embodiment will be described, wherein the source base station transmits the QoS measurements to the target base station over the X2 interface. Another embodiment will be presented, wherein the mobile node transmits the QoS measurements to the target base station.

### QoS measurement reporting via X2 interface

As described above, a shortcoming of the Uplink scheduling scheme described is that upon handover between a source and target radio cell, the information on past transmission statistics of the radio bearers configured for the UE is lost. According to an embodiment of the invention, the source eNodeB, i.e. the eNodeB that controlled the UE in the source radio cell before handover, reports QoS measurements of the UE's configured radio bearers to the target eNodeB in the target radio cell. The scheduler in the target eNodeB can use this information for a more efficient QoS-aware scheduling after handover.

The performance and quality of existing radio bearers can be better protected if information on past transmissions is also considered. The target eNodeB could for example determine the QoS indicator described above after handover more appropriately if it also accounts for the performance of the relevant radio bearer in the source radio cell rather than starting from scratch. Starting from scratch means that without this information, the target eNodeB would start scheduling the UE with the default QoS indicator, i.e. QoS indicator 1 in the exemplary scheduling method shown in Fig. 7, regardless of whether a configured radio bearer wasn't allocated sufficient resources in the source radio cell.

In the following embodiments of the invention, it shall be clear that the radio bearers established in the source radio cell between the mobile node and the source eNodeB before handover are the same as the radio bearers established in the target radio cell between the mobile node and the target eNodeB.

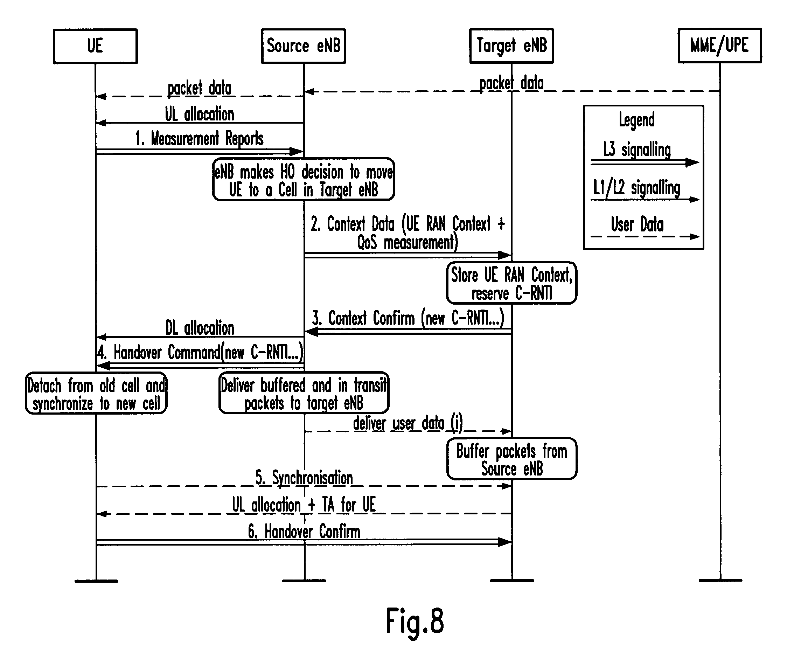

This embodiment of the invention will be described with respect to Fig. 8, which illustrates the steps of the handover procedure.

In step 1, the source eNodeB decides, based on measurement reports provided by the UE, to handoff the UE to the target eNodeB. As already outlined in the description of an inter e-Node B handover, the source eNodeB then prepares the target eNodeB for handover and passes relevant information in Handover Request message.

According to this embodiment of the invention, the source eNodeB includes in step 2 shown in Fig. 8 QoS measurements in the Handover Request message, in order to provide the target eNodeB with information on past transmission statistics of the radio bearers configured for the UE. This QoS information can be used in the target eNodeB for more efficient scheduling, e.g. the selection of an appropriate QoS indicator. The remaining steps of the handover procedure shown in Fig. 8 are similar to the steps described in Fig. 5 and their description is thus omitted.

Even though QoS measurement reporting between the source and target eNodeB would extend the message size of the Handover Request message, the overhead is expected to be fairly reasonable. In the following, an embodiment of the invention will be described which allows to reduce the signalling overhead.

According to an embodiment of the invention, the QoS measurement reporting is only done for certain radio bearers. If one or a subset of the plurality of configured radio bearers is more likely to undergo a degradation of the Quality of Service, e.g. a low priority radio bearer, the source eNodeB only reports the QoS measurement for this particular radio bearer or subset of radio bearers to the target eNodeB. The source eNodeB may be configured to report QoS measurements only for some radio bearers to the target eNodeB. The configuration of the QoS measurement reports could be for example done by the source eNB or target eNB. Alternatively the Access Gateway may also configure the QoS measurement reports.

### QoS measurement reporting over the air interface

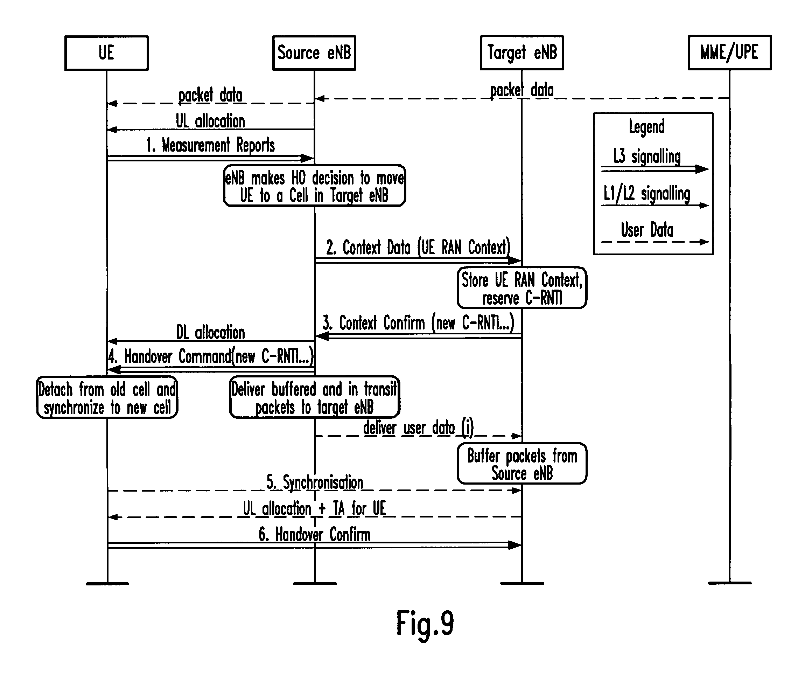

Another embodiment of the invention will be described in the following, according to which the mobile node transmits the QoS measurements to the target base station. This embodiment will be described with respect to Fig. 9.

In this embodiment, the UE reports the QoS measurements of the configured radio bearers measured in the source radio cell to the target eNodeB controlling the target radio cell. The QoS measurement reports are included in the Handover Confirm message, which is transmitted by the UE to the target eNodeB in step 6 in Fig. 9 after the handover procedure is completed in the UE. The steps of the handover procedure until step 5 are similar to the description given with respect to Fig. 5 and are thus omitted.

According to another embodiment of the invention, the UE considers past transmission activities of its configured radio bearers when distributing allocated radio resources among configured radio bearers, i.e. when performing the Transport Format Combination (TFC) selection. The UE performs and stores QoS measurements per radio bearer, e.g. information of past transmission statistics, which is then used for distributing the allocated radio resources to the radio bearers. Since the UE takes into account the past transmission statistics for the radio bearers in the source radio cell when distributing the allocated radio resources to the radio bearers in the target radio cell, the problem of a radio bearer undergoing a degradation of its Quality of Service after a handover can be alleviated. Thus, a minimum bit rate can be provided for a particular radio bearer.

This embodiment of the invention, according to which the UE reports QoS measurements to the target eNodeB, has the advantage over the embodiment, according to which the source eNodeB reports QoS measurements to the target eNodeB, that the information reported by the UE reflects the most recent status. Indeed, when the source eNodeB reports the QoS measurements in the Handover Request message of step 2 shown in Fig. 8, these measurements do not take into account the evolution of the Quality of Service parameter in the time period between the Handover Preparation message sent in step 2 and the Handover confirm message sent in step 6 shown in Fig. 9. Hence, when the UE transmits the QoS measurements to the target eNodeB, up-to-date QoS measurements are transmitted to the target eNodeB. Further, in the time period between step 2 and 6, the scheduler in the source eNodeB can still schedule the UE.

In a similar way as for the embodiment where the source eNodeB transmits the QoS measurements to the target eNodeB, the signalling overhead generated by the transmission of QoS measurements for all the configured radio bearers could be reduced in that the UE only reports QoS measurements for certain radio bearers. QoS measurement reports could be either configured by the network or the UE could decide itself for which radio bearer it reports QoS measurements to the target eNodeB.

In the following, different possible implementations for the measuring and reporting of a Quality of Service parameter to the target eNodeB of the target radio cell upon handover will be described.

### Definition of a Quality of Service parameter

According to one embodiment of the invention, the Quality of Service parameter provided to the target eNB comprises a provided bit-rate for each radio bearer. The measurement of a provided bit-rate can be similar to the measurement of a provided bit rate in HSDPA and HSUPA. For each radio bearer, the MAC entity in the eNodeB measures the total number of MAC PDU bits whose transmission over the radio interface has been considered successful by MAC in the eNodeB during a measurement period, divided by the duration of the measurement period. This implementation is more suitable for the case where the eNodeB measures the QoS parameter and reports the QoS measurements to the target eNodeB.

In case the UE reports the QoS measurements to the target eNodeB, the UE can access the total number of MAC PDU bits whose transmission over the radio interface has been considered successful by receiving acknowledgments for these MAC PDU's. This would thus require the presence of an acknowledgment mode of the reception of MAC PDU's.

According to a first embodiment of the invention, the unit forwarding the QoS measurements to the target eNodeB, i.e. the UE or source eNodeB, forwards the measured provided bit rate for all or a subset of the plurality of configured radio bearers.

According to a second embodiment of the invention, only an indication whether the total number of bits per radio bearer transmitted successfully per time duration is smaller than a threshold is signalled to the target eNodeB. In the following, a STATE parameter is described. As indicated in the table below, the STATE parameter could indicate whether the measured provided bit rate is less than or higher than a minimum bit rate configured for the relevant radio bearer. The minimum bit rate would be a QoS parameter configured per radio bearer by the network, for example as part of the QoS profile. This option would only require the signalling of 1 bit per radio bearer for the QoS measurement reports.

| **STATE Flag** | **Meaning** |
|---|---|
| **0** | Provided bit rate is less than configured minimum bit rate |
| **1** | Provided bit rate is greater than or equal to the configured minimum bit rate |

Transmitting a STATE parameter instead of the actual measured provided bit rate provides the advantage of reducing the signalling overhead of the reporting of the QoS measurements.

According to a third embodiment of the invention, the unit forwarding the QoS measurements, i.e. the source eNodeB or the UE, reports within the QoS measurements a preferred priority order of the distribution of allocated radio resources by the mobile node to the configured radio bearers. This preferred priority order could be a suggested QoS indicator that indicates an appropriate QoS indicator after radio cell change based on past transmission characteristics in order to meet the QoS requirements.

In the first embodiment, the target eNodeB determines a QoS indicator based on the reported provided bit rate measurements, whereas in the third embodiment the source eNodeB or the UE determines the QoS indicator "in advance" based on the provided bit rates that they measured and then signals only the indicator to the target eNodeB. Hence, the signalling overhead can be reduced.

The different possible implementations for the reporting of the measured QoS parameter represent a trade-off between quantity of informational content and required signalling overhead. Whereas the signalling of the actual provided bit-rate per radio bearer provides the target eNodeB with the most accurate information, the STATE flag or the suggested QoS indicator require less signalling.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

In the previous paragraphs various embodiments of the invention and variations thereof have been described. It would be appreciated by a person skilled in the art that numerous variations and/or modifications may be made to the present invention as shown in the specific embodiments without departing from the spirit or scope of the invention as broadly described. For instance, even though the invention has been described referring to a particular uplink scheduling scheme, other scheduling schemes may be considered.

It should be further noted that most of the embodiments have been outlined in relation to a 3GPP-based communication system and the terminology used in the previous sections mainly relates to the 3GPP terminology. However, the terminology and the description of the various embodiments with respect to 3GPP-based architectures is not intended to limit the principles and ideas of the inventions to such systems.

Also the detailed explanations given in the Technical Background section above are intended to better understand the mostly 3GPP specific exemplary embodiments described herein and should not be understood as limiting the invention to the described specific implementations of processes and functions in the mobile communication network. Nevertheless, the improvements proposed herein may be readily applied in the architectures described in the Technological Background section. Furthermore the concept of the invention may be also readily used in the LTE RAN currently discussed by the 3GPP.

## Claims

1. A method for determining Quality of Service information of at least one radio bearer configured for a mobile node, said method comprising the following steps performed by a target base station:
receiving first information on a Quality of Service parameter of at least one radio bearer upon handover of the mobile node from a source radio cell to the target radio cell controlled by the target base station, said Quality of Service parameter being measured in the source radio cell, and
determining second information on the Quality of Service parameter of the at least one configured radio bearer based on the received information on the Quality of Service parameter measured in the source radio cell.

2. The method according to claim 1, wherein the target base station schedules the mobile node based on the second information on the Quality of Service parameter.

3. The method according to claim 1, wherein the target base station allocates radio resources to the mobile node based on the second information on the Quality of Service parameter.

4. The method according to one of claims 1 to 3, wherein the target base station determines radio resource distribution information for the mobile node based on the second information on the Quality of Service parameter.

5. The method according to one of claims 3 or 4, wherein the resource allocation information and radio resource distribution information is transmitted to the mobile node jointly in a control message or separately in separate control messages.

6. The method according to one of claims 1 to 5, wherein the target base station receives the information on the Quality of Service parameter of the at least one configured radio bearer from a source base station controlling the source radio cell.

7. The method according to claim 6, wherein the target base station receives the first information on the Quality of Service parameter of the at least one configured radio bearer from the source base station in a handover request message.

8. The method according to one of claims 1 to 7, wherein a source base station controlling the source radio cell measures the Quality of Service parameter of the at least one radio bearer established between the mobile node and the source base station.

9. The method according to one of claims 1 to 8, wherein a plurality of radio bearers is configured for the mobile node, and the target base station receives the Quality of Service parameter for all or a subset of the plurality of radio bearers from a source base station controlling the source radio cell.

10. The method according to one of claims 1 to 9, wherein the target base station accumulates history information on the Quality of Service parameter upon handover of the mobile node from the source radio cell to the target radio cell.

11. The method according to one of claims 1 to 10, wherein a plurality of radio bearers is configured for the mobile node, and radio resource distribution information comprises an indication of a priority order of the distribution of allocated radio resources by the mobile node to the plurality of configured radio bearers.

12. The method according to one of claims 1 to 11, wherein the target base station measures and records a value of the measured Quality of Service parameter for each configured radio bearer over a predetermined period of time.

13. The method according to claim 12, wherein the target base station detects when a recorded value of a Quality of Service parameter of a radio bearer out of a plurality of radio bearers is smaller than a predetermined value, and increases the priority of the radio bearer in a priority order of the distribution of radio resources by the mobile node to the plurality of configured radio bearers.

14. The method according to one of claims 1 to 13, wherein the Quality of Service parameter of the at least one radio bearer comprises the total number of bits of the at least one radio bearer transmitted successfully over the radio interface in a predetermined time duration divided by the time duration.

15. The method according to one of claims 1 to 13, wherein a plurality of radio bearers is configured for the mobile node, and the Quality of Service parameter of a radio bearer comprises the total number of bits of the radio bearer transmitted successfully over the radio interface in a predetermined time duration divided by the time duration.

16. The method according to claim 14 or 15, wherein the target base station receives for the at least one configured radio bearer the total number of bits per time duration.

17. The method according to claim 14 or 15, wherein a minimum bit rate is configured for a radio bearer, and the target base station receives a bit for a radio bearer indicating whether the total number of bits per time duration is smaller than the configured minimum bit rate.

18. The method according to claim 14 or 15, wherein a plurality of radio bearers is configured for the mobile node, and the target base station receives for the at least one radio bearer a preferred priority order of the distribution of allocated radio resources by the mobile node to the plurality of configured radio bearers, wherein the preferred priority order is based on the measured Quality of Service parameter of the at least one radio bearer in the source radio cell.

19. A method for distributing radio resources to at least one radio bearer configured for a mobile node, said method comprising the following step performed by the mobile node:
distributing allocated radio resources to the at least one radio bearer established between the mobile node and a target base station in the target radio cell taking into account information on a Quality of Service parameter of the at least one radio bearer upon handover of the mobile node from the source radio cell to the target radio cell, said Quality of Service parameter being measured in the source radio cell.

20. The method according to claim 19, wherein the mobile node receives radio resource distribution information from the target base station that is based on the information on the Quality of Service parameter of the at least one radio bearer.

21. The method according to claim 20, wherein, in the step of distributing the allocated radio resources to the at least one configured radio bearer, the allocated radio resources are distributed based on the received radio resource distribution information, thereby taking into account the information on the Quality of Service parameter measured in the source radio cell.

22. The method according to claim 20, wherein the mobile node receives resource allocation information from the target base station that is based on the information on the Quality of Service parameter of the at least one radio bearer.

23. The method according to claim 22, wherein, in the step of distributing the allocated radio resources to the at least one configured radio bearer, the allocated resources signalled in the received resource allocation information are distributed based on the received radio resource distribution information, thereby taking into account the information on the Quality of Service parameter measured in the source radio cell.

24. The method according to one of claims 19 to 23, wherein the mobile node receives resource allocation information and radio resource distribution information jointly in a control message or separately in separate control messages.

25. The method according to claim 24, wherein the control message is a scheduling-related control message received from the target base station.

26. The method according to one of claims 19 to 26, wherein the mobile node transmits the information on the Quality of Service parameter of the at least one radio bearer to the target base station.

27. The method according to claim 26, wherein the mobile node transmits the information of the Quality of Service parameter of the at least one radio bearer to the target base station in a radio bearer reconfiguration message upon handover procedure completion.

28. The method according to one of claims 19 to 27, wherein the mobile node measures the Quality of Service parameter of the at least one radio bearer configured in the source radio cell.

29. The method according to one of claims 19 to 28, wherein a plurality of radio bearers is configured for the mobile node, and the mobile node is configured to transmit the Quality of Service parameter for all or a subset of the plurality of radio bearers to the target base station.

30. The method according to one of claims 19 to 29, wherein the mobile node accumulates history information on the Quality of Service parameter upon handover of the mobile node from the source radio cell to the target radio cell.

31. The method according to one of claims 19 to 30, wherein a plurality of radio bearers is configured for the mobile node, and radio resource distribution information comprises an indication of a priority order of the distribution of allocated radio resources by the mobile node to the plurality of configured radio bearers.

32. The method according to one of claims 19 to 31, wherein the mobile node measures and records a value of the measured Quality of Service parameter for each of the configured radio bearer over a predetermined period of time.

33. The method according to claim 32, wherein the mobile node detects when a recorded value of a Quality of Service parameter of a radio bearer out of a plurality of radio bearers is smaller than a predetermined value, and increases the priority of the radio bearer in a priority order of the distribution of allocated radio resources by the mobile node to the plurality of configured radio bearers.

34. The method according to one of claims 19 to 33, wherein the Quality of Service parameter of the at least one radio bearer comprises the total number of bits of the at least one radio bearer transmitted successfully over the radio interface in a predetermined time duration divided by the time duration.

35. The method according to one of claims 19 to 33, wherein a plurality of radio bearers is configured for the mobile node, and the Quality of Service parameter of a radio bearer comprises the total number of bits for the corresponding radio bearer transmitted successfully over the radio interface in a predetermined time duration divided by the time duration.

36. The method according to claim 34 or 35, wherein the mobile node transmits to the target base station for the at least one configured radio bearer the total number of bits per time duration.

37. The method according to claim 34 or 35, wherein a minimum bit rate is configured for the at least one radio bearer, and the mobile node transmits to the target base station a bit for a radio bearer indicating whether the total number of bits per time duration is smaller than the configured minimum bit rate.

38. The method according to claim 34 or 35, wherein a plurality of radio bearers is configured for the mobile node, and the mobile node transmits to the target base station for the at least one radio bearer a preferred priority order of the distribution of allocated radio resources by the mobile node to the plurality of configured radio bearers, wherein the preferred priority order is based on the measured Quality of Service parameter of the at least one radio bearer.

39. A base station for determining Quality of Service information of at least one radio bearer configured for a mobile node, the base station comprising:
receiving means for receiving first information on a Quality of Service parameter of at least one radio bearer upon handover of the mobile node from a source radio cell to a target radio cell controlled by the base station, said Quality of Service parameter being measured in the source radio cell, and
determining means for determining second information on the Quality of Service parameter of the at least one configured radio bearer based on the received information on the Quality of Service parameter measured in the source radio cell.

40. The base station according to claim 39, further comprising means adapted to perform the method according to one of claims 1 to 18.

41. A mobile node for distributing radio resources to at least one radio bearer configured for the mobile node, the mobile node comprising:
distributing means for distributing allocated radio resources to the at least one radio bearer established between the mobile node and a target base station in the target radio cell taking into account information on a Quality of Service parameter of the at least one radio bearer upon handover of the mobile node from the source radio cell to the target radio cell, said Quality of Service parameter being measured in the source radio cell.

42. The mobile node according to claim 41, further comprising means adapted to perform the method according to one of claims 20 to 38.

43. A communication system comprising a base station according to claim 39 or 40 and a mobile node according to claim 41 or 42.

44. A computer readable medium storing instruction that, when executed by a processor of a base station, cause the base station to determine Quality of Service information of at least one radio bearer configured for a mobile node, by:
receiving first information on a Quality of Service parameter of at least one radio bearer upon handover of the mobile node from a source radio cell to the target radio cell controlled by the base station, said Quality of Service parameter being measured in the source radio cell, and
determining second information on the Quality of Service parameter of the at least one configured radio bearer based on the received information on the Quality of Service parameter measured in the source radio cell.

45. The computer-readable medium according to claim 44, further storing instruction that, when executed by the processor of the base station cause the base station to perform the steps of the method according to one of claims 1 to 18.

46. A computer readable medium storing instruction that, when executed by a processor of a mobile node, cause the mobile node to distribute radio resources to at least one radio bearer configured for the mobile node, by:
distributing allocated radio resources to the at least one radio bearer established between the mobile node and a target base station in the target radio cell taking into account information on a Quality of Service parameter of the at least one radio bearer upon handover of the mobile node from the source radio cell to the target radio cell, said Quality of Service parameter being measured in the source radio cell.

47. The computer-readable medium according to claim 46, further storing instruction that, when executed by the processor of the mobile node cause the mobile node to perform the steps of the method according to one of claims 20 to 38.
